# EUROPÄISCHE PATENTSCHRIFT

(11) **EP 1 839 807 B1**
(45) Veröffentlichungstag und Bekanntmachung des Hinweises auf die Patenterteilung: **15.02.2012**
(21) Anmeldenummer: 06024636.0
(22) Anmeldetag: 28.11.2006
(51) Int. Cl.: B23Q 5/32, B23Q 5/52, F16H 25/20

(54) **Werkzeugtreiberaggregat**
Tool driving assembly
Ensemble d'actionnement pour un outil

(30) Priorität: 30.03.2006 DE 102006014834
(43) Veröffentlichungstag der Anmeldung: 03.10.2007
(73) Patentinhaber: Otto Bihler Handels-Beteiligungs-GmbH, 87642 Halblech/Füssen (DE)
(72) Erfinder: Köpf, Johann, 87642 Halblech (DE)
(74) Vertreter: Tiesmeyer, Johannes

(56) Entgegenhaltungen:
- DE-A1- 10 120 490
- GB-A- 2 097 197
- US-A- 4 398 109
- US-A- 5 649 451

## Beschreibung

Die vorliegende Erfindung betrifft ein Werkzeugtreiberaggregat, insbesondere für den Antrieb von Transportwerkzeugen, umfassend ein Linearstellglied mit einem in einem Gehäuse gelagerten, eine Drehachse festlegenden Aktuator, der durch eine erste Drehantriebseinrichtung angetrieben und relativ zu dieser in Axialrichtung verstellbar ist, wobei das Aggregat ferner eine zweite Drehantriebseinrichtung aufweist, die derart auf den Aktuator wirkt, dass die axiale Verstellung oder/und eine Drehung des Aktuators relativ zu den beiden Drehantriebseinrichtungen abhängig von einer jeweiligen Drehzahl der beiden Drehantriebseinrichtungen einstellbar ist, und wobei die zweite Drehantriebseinrichtung eine Welle antreibt, welche mit dem Aktuator in gemeinsame Drehung um die Drehachse versetzt werden kann und gemeinsam relativ zu den beiden Drehantriebseinrichtungen axial verstellbar ist.

Eine solches Werkzeugtreiberaggregat ist beispielsweise aus der DE 39 10 083 A1 bekannt. Dieses Aggregat weist ein durchgehendes Gehäuse auf und die Drehzahlen der beiden Drehantriebseinheiten werden über eine geeignete Steuerung eingestellt.

Die gattungsbildende US 5,649,451 offenbart eine Antriebseinheit, die gleichzeitig Drehbewegungen und Linearbewegungen ausführen kann. Dazu ist eine Welle mit einem Keilwellenabschnitt und einem Gewindeabschnitt vorgesehen, wobei ein erster Antriebsmotor eine mit einem Gegengewinde versehene Hohlwelle antreibt und ein zweiter Antriebsmotor, der drehfest mit dem ersten Antriebsmotor verbunden ist, eine zweite Hohlwelle mit einer Gegenverzahnung zu der Keilwelle antreibt. Die Welle ist mit ihrem jeweiligen Abschnitt in die Hohlwelle mit dem Gegengewinde bzw. der Gegenverzahnung eingebracht. Durch Betätigung des ersten Antriebsmotors kann ein Vorschub der Spindel erzeugt werden, und durch gleichzeitige Betätigung beider Antriebsmotoren kann eine Rotation bewirkt werden.

US 4,398,109 offenbart einen elektromotorischen Linearantrieb, bei dem eine Spindel, die drehfest, aber verschieblich mit dem Motorgehäuse verbunden ist, linear aus dem Motorgehäuse aus- bzw. eingefahren werden kann. Der Antrieb der Spindel ist durch eine mit einem innengewinde versehene Hohlwelle realisiert, das in ein Gegengewinde auf der Spindel eingreift. Um ein Verklemmen des Linearantriebs in seinen Endstellungen, d. h. im voll eingefahrenen und ausgefahrenen Zustand, durch Anlage einer Axialfläche der Hohlwelle an einer axialen Anschlagsfläche der Spindel zu verhindern, sind Drehanschläge an Hohlwelle und Spindel vorgesehen, die eingreifen, bevor sich die Axialflächen von Spindel und Hohlwelle berühren. Auf diese Weise wird eine problemlose Umkehr der Bewegungsrichtung an den Endanschlägen gewährleistet.

Aufgabe der Erfindung ist es demgegenüber, ein solches Werkzeugtreiberaggregat derart weiterzubilden, dass es ein rasches und präzises Zustellen eines Werkzeugs in bestimmte Drehstellungen ermöglicht.

Diese Aufgabe wird mit einem Werkzeugtreiberaggregat gemäß Anspruch 1 gelöst.

Ein solches Werkzeugtreiberaggregat ermöglicht durch die "Überlagerung" der von den beiden Drehantrieben erzeugten Drehbewegungen und durch das Einstellen unterschiedlicher oder gleicher Drehzahlen an beiden Drehantriebseinrichtungen beliebige Axial- oder/und Drehbewegungen. Hierbei kann beispielsweise eine axiale Zustellbewegung mit unterschiedlichen Geschwindigkeiten durchgeführt werden. Ferner kann eine reine Drehbewegung ohne axiale Verstellung des Aktuators dadurch erreicht werden, dass die beiden Drehantriebseinrichtungen mit gleicher Drehzahl angetrieben werden. Durch die mechanischen Anschlagmittel kann ein an der Welle angebrachtes Werkzeug sehr schnell und präzise von einer ersten in eine zweite Anschlagsposition gedreht werden, wobei die jeweilige Anschlagsposition nicht elektronisch eingeregelt werden muss, was mit einem Zeitverlust verbunden ist, sondern durch die Anschlagmittel festgelegt ist. Hierdurch wird eine schnellere Hin- und Herbewegung des Werkzeugs ermöglicht, was insbesondere für Transportwerkzeuge vorteilhaft ist, mit denen in einer Anschlagposition ein Werkstück ergriffen und in der anderen Anschlagposition freigegeben werden soll.

Erfindungsgemäß umfassen die mechanischen Anschlagmittel wenigstens ein bezüglich der beiden Drehantriebseinrichtungen ortsfestes Anschlagelement und wenigstens ein mit der Welle oder/und dem Aktuator verbundenes, drehbares Anschlagelement. Durch das ortsfeste Anschlagelement werden bevorzugt zwei Anschlagspositionen definiert, zwischen denen das drehbare Anschlagelement hin und her bewegbar ist.

Erfindungsgemäß wird weiter vorgeschlagen, dass sich das ortsfeste Anschlagelement in axialer Richtung über im wesentlichen die gesamte Länge der möglichen axialen Verstellung erstreckt, so dass das drehbare Anschlagelement in Anschlagsposition entlang dem ortsfesten Anschlagelement axial gleiten kann.

Die zweite Drehantriebseinrichtung kann eine in einem weiteren Gehäuse gelagerte Welle antreiben, welche mit dem Aktuator zur gemeinsamen Drehung um die Drehachse und zur gemeinsamen axialen Verstellung relativ zu den beiden Drehantriebseinrichtungen koaxial gekoppelt oder koppelbar ist.

Durch eine solche koaxiale Kopplung einer durch ihre Drehantriebseinrichtung nur in Drehung versetzbaren Welle und eines durch seine Drehantriebseinrichtung nur in axialer Richtung verstellbaren Aktuators können die von der Welle bzw. dem Aktuator hervorgerufenen Bewegungen auch auf das jeweils andere Bauteil übertragen werden, so dass auch die Welle axial verstellbar ist und der Aktuator in Drehbewegung versetzt werden kann. Bei entsprechender Steuerung der Drehzahlen der beiden Drehantriebseinrichtungen können somit reine Axialbewegungen, reine Drehbewegungen sowie beliebige kombinierte Axial-/Drehbewegungen durchgeführt werden. Dies führt zu einer universellen Einsetzbarkeit des Werkzeugtreiberaggregats, insbesondere zum Ergreifen, Transportieren und Abstellen von Gegenständen. Dabei können durch die Einstellung der jeweiligen Drehzahlen der beiden Drehantriebseinrichtungen die Geschwindigkeiten der axialen Verstellung bzw. der Drehbewegung an den durch das Werkzeugtreiberaggregat durchzuführenden Arbeitsvorgang optimal angepasst werden.

Selbstverständlich ist es möglich, ein in einer ersten Anschlagsposition ergriffenes Werkstück auch an einer anderen Position als der zweiten Anschlagsposition wieder freizugeben. Dies kann beispielsweise eine zwischen den beiden Anschlagpositionen liegende Position sein, an der fehlerhafte Werkstücke aus einem Produktions- bzw. Förderweg herausgenommen werden sollen.

Gemäß einer Ausführungsform kann das ortsfeste Anschlagelement als Halbschale ausgebildet sein, welche die Welle oder/und den Aktuator teilweise umschließt. Eine solche Halbschale muss aber nicht zwangweise halbkreisförmig ausgebildet sein, also zwei Anschläge in einem Winkelabstand von 180° aufweisen, sondern kann auch einen Winkelabstand aufweisen, der kleiner oder größer ist. Denkbar sind auch hier als Halbschalen bezeichnete ortsfeste Anschlagelemente, welche beispielsweise einen Winkelabstand von 90, 120° oder 270° aufweisen.

Das drehbare Anschlagelement ist vorzugsweise als Stift ausgebildet, der sich in radialer Richtung weg von der Welle bzw. dem Aktuator erstreckt. Vorzugsweise verläuft der Stift im wesentlichen parallel zu einem Werkzeugausleger des an der Welle angebrachten Werkzeugs. Selbstverständlich sind auch andere Ausgestaltungen denkbar, welche den beabsichtigten Zweck erfüllen, insbesondere könnte das drehbare Anschlagelement auch als Kreissegment ausgebildet sein, so dass bei einem Winkelabstand der beiden Anschlagspositionen von 180° eine Drehung des Werkezugsauslegers um weniger als 180° erfolgt.

Um ein möglichst gutes Anliegen des drehbaren Anschlagelements am ortsfesten Anschlagelement zu gewährleisten, ist es bevorzugt, dass die erste oder/und die zweite Drehantriebseinrichtung derart angesteuert werden, dass das drehbare Anschlagelement in Anschlagsposition gegen das ortsfeste Anschlagelement vorgespannt ist. Hierbei ist es insbesondere möglich, dass eine Anschlagsposition an einem bestimmten Drehwinkel vorgesehen ist, wobei diese Anschlagsposition mechnisch festgelegt ist. Bei einer Drehung des Werkzeugs in diese Anschlagsposition erfolgt dann beispielsweise die Ansteuerung auf einen in Drehrichtung etwas weiter weg liegenden angesteuerten Drehwinkel. Dies führt dazu, dass das Werkzeug durch den mechanischen Anschlag in einem Bereich der Drehung blockiert wird, kurz bevor der für die elektronische Ansteuerung vorgegeben Sollwert der Drehwinkel-Endposition erreicht ist, so dass einerseits ein Andrücken des drehbaren Anschlagelements am ortfesten Anschlagelement und andererseits eine Zeitersparnis beim Erreichen der gewünschten Anschlagsposition stattfindet. Dabei ist es vorteilhaft, die Drehbewegung kurz vor Erreichen der Anschlagsposition zu verlangsamen.

Die Kopplung des Aktuators und der Welle kann durch Kraftschluss, insbesondere Formschluss, Verschweißung oder Verklebung, oder vermittels einer Adpatereinrichtung oder vermittels einer Sicherheitskupplung, insbesondere Rutschkupplung, vorgesehen sein.

Als Adaptereinrichtung zur Kopplung wird beispielsweise an ein hülsenartiges Element gedacht, das auf die miteinander zu koppelnden Enden des Aktuators und der Welle aufsteckbar, aufschraubbar oder dgl. ist, so dass die drehfeste und axial festgelegte Kopplung der Welle und des Aktuators erreicht wird. An einer solchen Adaptereinrichtung kann das drehbare Anschlagelement vorzugsweise integral ausgebildet sein. Aus Sicherheitsgründen kann auch eine Rutschkupplung vorgesehen sein, welche bei Überschreitung bestimmter Drehmomente eine Trennung zwischen der Welle und dem Aktuator ermöglicht, so dass Beschädigungen am Werkzeugtreiberaggregat möglichst vermieden werden können. Eine solche Sicherheitskupplung ist insbesondere dann sehr vorteilhaft, wenn das Werkzeugtreiberaggregat als Transportwerkzeug mit einem oder mehreren von der Drehachse radial vorstehenden Greiferarmen ausgebildet ist, da es relativ leicht passieren kann, dass aufgrund eines nicht ordnungsgemäß positionierten, zu ergreifenden Gegenstands oder durch Unachtsamkeit einer Bedienperson ein bzw. der Greiferarm in seiner Bewegung blockiert wird. Da solche Transporteinrichtungen in der Regel nicht darauf ausgelegt sind, hohe Drehmomente zu übertragen, kann der Widerstand einer solchen Sicherheitskupplung, insbesondere Rutschkupplung, sehr klein eingestellt werden, so dass Beschädigungen an dem Werkzeugtreiberaggregat nahezu ausgeschlossen werden können. Selbstverständlich ist der Einbau einer solchen Sicherheitskupplung aber nicht nur bei Transportwerkzeugen, sondern auch bei allen anderen Werkzeugen denkbar und vorteilhaft.

Es wird weiterbildend vorgeschlagen, dass die beiden Gehäuse mittels eines Gehäuseverbindungsabschnitts, insbesondere eines Flanschs, miteinander verbunden sind. Ein solcher Gehäuseverbindungsabschnitt ermöglicht die präzise Relativpositionierung der beiden Gehäuse und somit der beiden Drehantriebseinrichtungen koaxial zueinander, so dass nach Kopplung der Welle und des Aktuators Unwuchten in der Drehbewegung vermieden werden können.

In diesem Zusammenhang wird vorgeschlagen, dass die mechanischen Anschlagmittel im Bereich des Gehäuseverbindungsabschnitts vorgesehen sind.

Hierbei wird insbesondere daran gedacht, dass der Gehäuseverbindungsabschnitt derart ausgebildet ist, dass er das ortsfeste Anschlagelement bildet.

Denkbar ist auch die Ausgestaltung unterschiedlicher ortsfester Anschlagelemente, welche jeweils zwei Anschlagspositionen mit unterschiedlichem Winkelabstand definieren, wobei je nach Einsatzzweck des Aggregats ein entsprechendes ortsfestes Anschlagelement im Gehäuseverbindungsabschnitt eingesetzt wird. Ferner kann auch daran gedacht werden, das ortsfeste Anschlagelement derart auszubilden, dass es für unterschiedliche Winkelabstände der beiden Anschlagspositionen einstellbar ist, beispielsweise durch zwei in Umfangsrichtung gegeneinander verstellbare und arretierbare Halbschalen.

Ein durch das Werkzeugtreiberaggregat anzutreibendes Werkzeug kann drehfest an der Welle oder am Aktuator, vorzugsweise vermittels einer Adaptereinrichtung, angeschlossen oder anschließbar sein. Dabei ist es aufgrund der Kopplung der Welle und des Aktuators unerheblich, an welchem der beiden Bauteile das Werkzeug angebracht wird, da der Aktuator und die Welle, wie bereits oben erwähnt, sowohl Dreh- als auch Axialbewegungen durchführen können.

Besonders bevorzugt ist es, dass der Aktuator ein Außengewinde aufweist, das mit einem Innengewinde einer Hohlwelle der als Hohlwellenmotor ausgebildeten ersten Drehantriebseinrichtung in Eingriff steht, so dass durch die Verdrehung der Hohlwelle der Aktuator axial verstellbar ist, wobei in diesem Zusammenhang vorgeschlagen wird, dass das Linearstellglied als Kugelgewindetrieb ausgeführt ist, wobei der Aktuator als Gewindespindel und die Hohlwelle als Kugelmutter ausgeführt sind.

Die Hohlwelle ist also als Rotor mit Gewinde ausgebildet, der durch den Hohlwellenmotor in Drehbewegung versetzt wird, wobei die bevorzugte Ausbildung des Linearstellglieds als Kugelgewindetrieb eine präzise und reibungsarme Axialverstellung der Gewindespindel ermöglicht. Es wird darauf hingewiesen, dass es selbstverständlich auch möglich wäre, die Gewindespindel als Rotor anzutreiben, und die Kugelmutter mit einer daran angeschlossenen Hohlwelle axial zu verschieben, wobei die Hohlwelle dann mit der Welle der zweiten Drehantriebseinrichtung zu verbinden wäre.

Es ist ferner bevorzugt, dass die Welle als Vielkeilwelle, insbesondere Zahnwelle, ausgebildet ist, die in einer komplementär ausgebildeten Vielkeilhohlwelle der als Hohlwellenmotor ausgebildeten zweiten Drehantriebseinrichtung aufgenommen ist, so dass die Vielkeilhohlwelle und die Welle synchron drehangetrieben aber axial relativ zueinander verstellbar sind.

Die Zähne der Welle bzw. der Hohlwelle können dabei als Keile, im Wesentlichen rechteckige Vorsprünge, schwalbenschwanzartige Vorsprünge oder dgl. ausgeführt sein. Die Formgebung der Zähne muss die gemeinsame Drehbewegung und die axiale Verstellung der Welle innerhalb der Hohlwelle ermöglichen.

Um die Drehzahlen der beiden Drehantriebseinrichtungen einstellen und für gewünschte Axialbewegungen, Drehbewegungen oder kombinierte Bewegungen aufeinander abzustimmen, weist das Werkzeugtreiberaggregat vorzugsweise eine Antriebssteuerung auf.

Weiterbildend wird ferner vorgeschlagen, dass der Aktuator und die Welle als einstückiges Stabelement ausgeführt sind. Eine solche einstückige Ausführung ist insbesondere dann von Vorteil, wenn das Werkzeugtreiberaggregat als Ganzes hergestellt wird und nicht aus einer möglichen Kombination bereits erhältlicher Drehmitnahmeeinrichtungen zusammengebaut wird. In diesem Zusammenhang kann dann selbstverständlich auch ein für beide Drehantriebseinrichtungen und das sie verbindende Stabelement gemeinsames, vorzugsweise einstückiges Gehäuse vorgesehen werden.

Die Erfindung wird nachfolgend unter Bezugnahme auf die anliegenden Figuren in einer Ausführungsform beispielhaft und nicht einschränkend beschrieben.
- Fig. 1: zeigt eine teilgeschnittene Seitenaufrissdarstellung einer Aus- führungsform des Werkzeugtreiberaggregats.
- Fig. 2: zeigt eine Draufsicht auf das Werkzeugtreiberaggregat gemäß Pfeil II der Fig. 1.
- Fig. 3: ist eine stark schematisierte Darstellung der Drehantriebsein- richtungen zur Erläuterung des Funktionsprinzips des Werk- zeugtreiberaggregats.
- Fig. 4: ist eine Seitenaufrissdarstellung des Werkzeugtreiberaggregats mit zwischen den Drehantriebseinrichtungen angeordneten An- schlagsmitteln.
- Fig. 5: ist eine Vergrößerung der Aufrissansicht der Anschlagmittel ge- mäß Fig. 4.

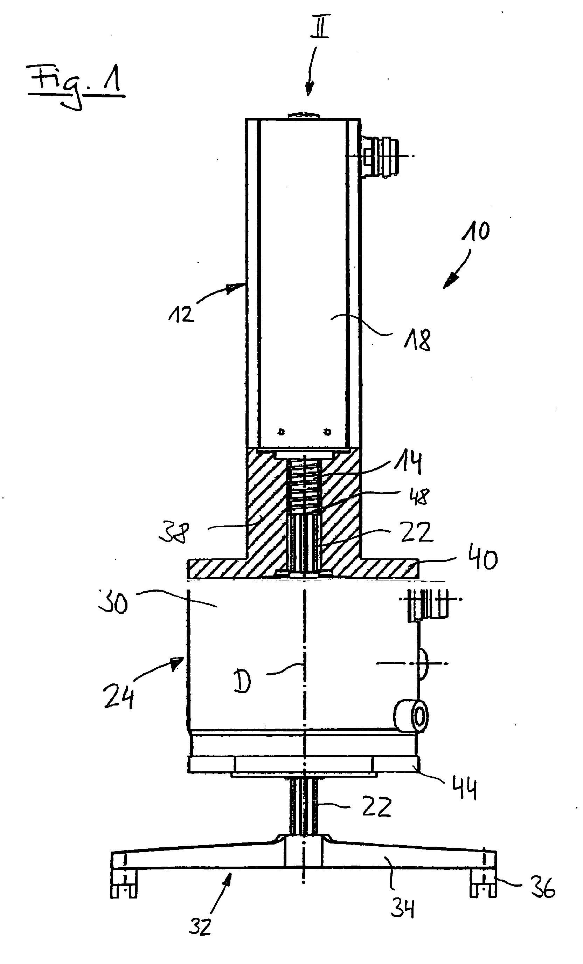

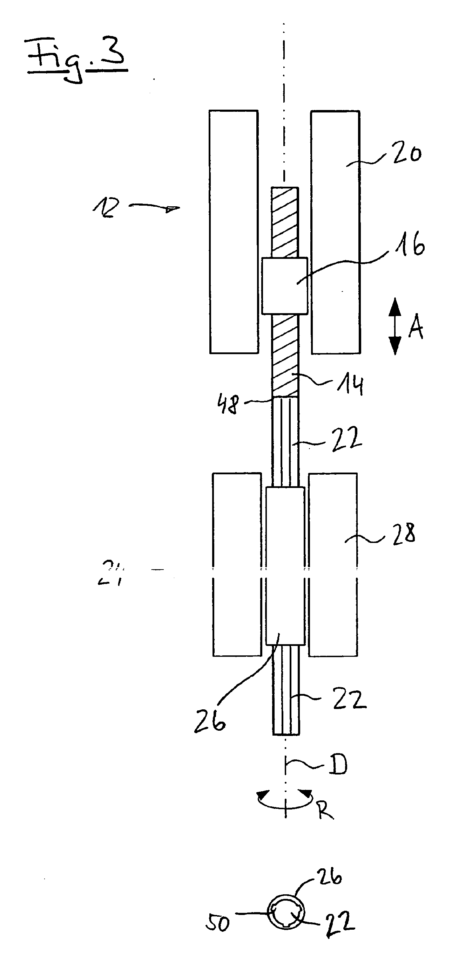

In der Figur 1 ist eine Ausführungsform eines Werkzeugtreiberaggregats 10 in einem teilgeschnittenen seitlichen Aufriss dargestellt. Das Werkzeugtreiberaggregat 10 umfasst ein Linearstellglied 12, das als elektrischer Servo-Linearaktuator mit einem Kugelumlaufgewindetrieb ausgeführt ist, wobei die als Aktuator wirkende Gewindespindel 14 durch Verdrehen einer in Fig. 3 schematisch dargestellten Spindeltriebmutter 16 in axialer Richtung aus einem Gehäuse 18 des Linearstellglieds 12 axial ausfahrbar und in dieses einfahrbar ist. Die Spindeltriebmutter 16 dient als Rotor und bildet mit dem Stator 20 des Linearstellglieds 12 einen nachfolgend auch als Linearmotor bezeichneten Drehantrieb. Die Spindeltriebmutter 16 ist selbstverständlich derart im Gehäuse 18 des Linearstellglieds 12 gelagert, dass sie sich relativ zu diesem drehen kann, aber axial festgelegt ist. Die Verdrehung der Spindeltriebmutter 16 führt somit zur axialen Verstellung der Gewindespindel 14.

Die Gewindespindel 14 ist koaxial bezogen auf eine Drehachse D mit einer Welle 22 gekoppelt, welche durch einen Hohlwellenmotor 24 in Drehbewegung versetzt wird. Die Welle 22 ist im Hohlwellenmotor drehfest in einer Hohlwelle 26 gelagert, welche als Rotor dient und mittels des Stators 28 in Drehbewegung versetzt wird. Auch die Hohlwelle 26 ist derart in einem Gehäuse 30 des Hohlwellenmotors 24 gelagert, dass sie relativ zu diesem gedreht werden kann, aber axial festgelegt ist.

In Fig. 1 ist beispielhaft ein vom Werkzeugtreiberaggregat 10 angetriebenes Greiferwerkzeug 32 dargestellt, das an zwei radial von der Drehachse D wegstehenden Armen 34 jeweils einen Greifer 36 aufweist. Dieses Greiferwerkzeug 32 ist nur beispielhaft und es ist selbstverständlich, dass anstelle des Greiferwerkzeugs 32 Bohrer, Gewindeschneider, Wickelvorrichtungen, Fräser und dgl. Werkzeuge angebracht werden können, ggf. auch mittels eines Adapters, der den Anschluss unterschiedlicher Werkzeuge an dem Werkzeugtreiberaggregat 10 ermöglicht.

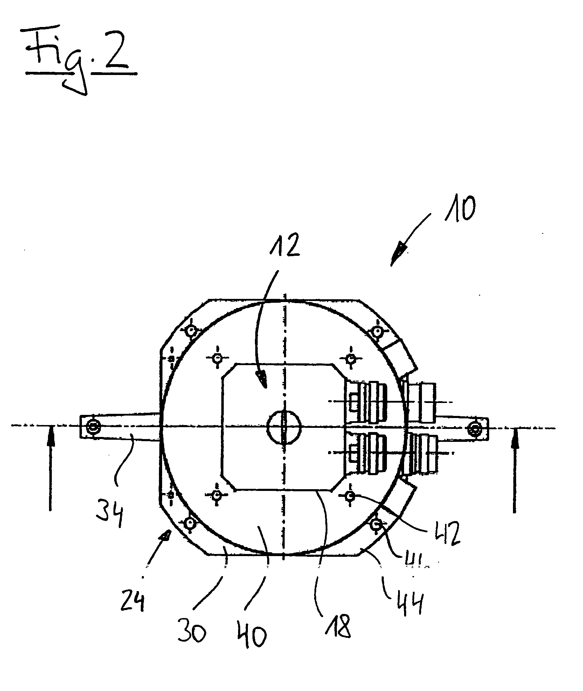

Der Verbindungsbereich zwischen der Gewindespindel 14 und der Welle 22 ist von einem Gehäuseabschnitt 38 umgeben, der das Gehäuse 18 des Linearstellglieds 12 mit dem Gehäuse 30 des Hohlwellenmotors 24 verbindet. Der Gehäuseabschnitt 38 ist mit einem Flansch 40 ausgebildet, und weist daran vier Durchgangslöcher 42 auf, durch welche der Gehäuseabschnitt 38 mit dem Gehäuse 30 des Hohlwellenmotors 24 beispielsweise mittels Schrauben oder dgl. verbunden werden kann (Fig. 2). Ferner weist auch das Gehäuse 30 des Hohlwellenmotors 24 an seiner Unterseite flanschartige Vorsprünge 44 auf, in denen Durchgangslöcher 46 ausgebildet sind, um den Hohlwellenmotor bzw. das gesamte Werkzeugtreiberaggregat auf einer entsprechenden Trägervorrichtung beispielsweise mittels einer Schraubverbindung befestigen zu können. Die Verbindung zwischen dem Gehäuseabschnitt 38 und dem Gehäuse 18 des Linearstellglieds 12 kann beispielsweise durch gegenseitigen Verrastungseingriff oder dgl. hergestellt werden.

Die im Ausführungsbeispiel getrennten Gehäuseteile 18, 30 und 38 können alternativ auch zu einem einstückigen Gesamtgehäuse zusammengefasst sein, so dass auf entsprechende Verrastungen, Verschraubungen oder sonstige Verbindungsmittel zwischen den einzelnen Gehäuseteilen verzichtet werden kann. Ferner wird darauf hingewiesen, dass im Ausführungsbeispiel die Gewindespindel 14 und die Welle 22 als einstückiges Stabelement ausgeführt sind, wobei es alternativ denkbar ist, die Gewindespindel 14 und die Welle 22 in einem Verbindungsbereich 48 vermittels eines Adapters oder dgl. koaxial, drehfest und axial festgelegt zu verbinden.

Bezug nehmend auf Fig. 3 wird noch darauf hingewiesen, dass die Welle 22 und die Hohlwelle 26 ein komplementäres Profil, beispielsweise mit Verzahnungen 50, aufweisen, so dass sie miteinander drehfest verbunden sind, wobei die Welle 22 in axialer Richtung in der Hohlwelle 26 verstellbar ist.

Unter Bezugnahme auf Fig. 3 wird nun die prinzipielle Funktionsweise des Werkzeugtreiberaggregats 10 erklärt. Wie bereits erwähnt, sind in der Fig. 3 der Stator 20, die Spindeltriebmutter 16 und die Gewindespindel 14 des Linearstellglieds bzw. Linearmotors 12 und die Welle 22, die Hohlwelle 26 und der Stator 28 des Hohlwellenmotors 24 stark schematisch dargestellt. Vermittels einer nicht dargestellten Steuereinheit werden für die jeweiligen Rotoren, also die Spindeltriebmutter 16 und die Hohlwelle 26, Drehzahlen eingestellt, um gewünschte Verstellungen in axialer Richtung gemäß Pfeil A oder/und Drehbewegungen um die Drehachse D gemäß Pfeil R zu bewirken. Da die Gewindespindel 14 und die Welle 22 miteinander gekoppelt, insbesondere einstückig ausgebildet sind, können die von der Gewindespindel 14 durchgeführten Axialbewegungen auf die Welle 22 übertragen werden, und die Welle 22 kann ihre Drehbewegung auf die Gewindespindel 14 übertragen. Somit kann mit einem solchen Werkzeugtreiberaggregat abhängig von den jeweils eingestellten Drehzahlen oder/und dem Drehsinn der beiden Elektromotoren die gemeinsame Axialverstellung und Drehbewegung der Gewindespindel 14 und der Welle 22 gesteuert werden.

Für eine reine Axialbewegung wird nur der Linearmotor 12 betätigt, so dass die Spindeltriebmutter 16 in Drehung versetzt wird, wodurch die Gewindespindel 14 und die Welle 22 in axialer Richtung bewegt werden.

Um eine reine Drehbewegung zu ermöglichen, werden beide Motoren mit gleicher Drehzahl und gleichem Drehsinn betrieben, so dass durch die von der Welle 22 auf die Gewindespindel 14 übertragene Drehung die Drehung der Spindeltriebmutter 16 kompensiert wird, damit keine axiale Verstellung erfolgt.

Kombinierte Axial- und Drehbewegungen lassen sich gemäß einer ersten Möglichkeit erreichen durch alleinige Betätigung des Hohlwellenmotors 24. Hierbei drehen sich die Welle 22 und die Gewindespindel 14 und aufgrund der Abstützung der Gewindespindel 14 an der axial festgelegten Spindeltriebmutter und der Kugelgewindeverbindung werden sie in axialer Richtung verschoben, sofern die Spindeltriebmutter an einer Mitdrehung gehindert wird. Weitere kombinierte Axial-/Drehbewegungen können durch Einstellung unterschiedlicher Drehzahlen an den beiden Elektromotoren erreicht werden.

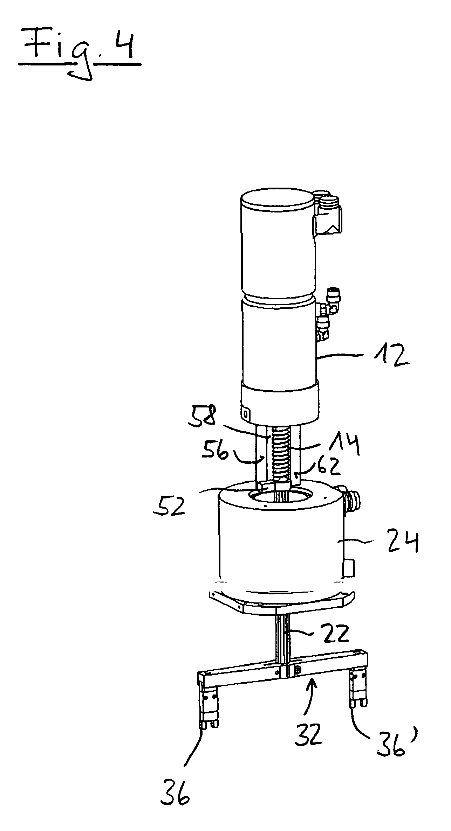

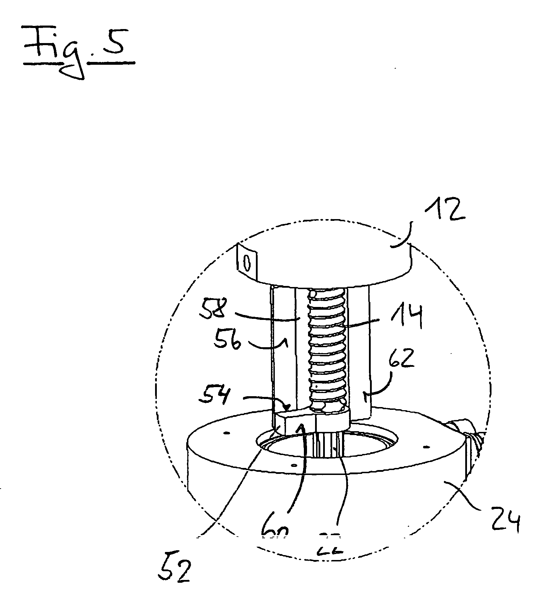

Um schnelle hin und her gehende Drehbewegungen des Greiferwerkzeugs 32 zu ermöglichen, wie dies beispielsweise bei Zustellbewegungen von einer Bearbeitungsstation einer Produktionsstrecke zu einer nächsten Station erforderlich ist, sind im Werkzeugtreiberaggregat Anschlagmittel 50 vorgesehen, welche nachfolgend unter Bezugnahme auf die Fig. 4 und 5 näher erläutert werden.

Die Welle 22 weist einen mit ihr drehfest verbundenen Stift 52 auf, der mit einer ersten Seitenfläche 54 in einer ersten Anschlagsposition an einer ersten Randfläche 56 eines als Halbschale ausgebildeten, bezüglich der Drehantriebseinrichtungen 12, 24 ortsfesten Anschlagelements 58 anliegt. Bei einer Drehbewegung der Welle 22 bezogen auf die Figuren 4 und 5 von links nach rechts dreht sich das an der Welle 22 angebrachte Greifwerkzeug 32 um 180° bis der Stift 52 mit seiner zweiten Seitenfläche 60 an der zweiten Randfläche 62 der Halbschale 58 in der zweiten Anschlagsposition anliegt. Während dieser Drehbewegung um 180° wird das Werkzeug 32 durch entsprechende Ansteuerung zusätzlich in axialer Richtung nach oben und wieder nach unten bewegt. Diese axiale Bewegung ermöglicht es, mit dem Greifer 36 ein Werkstück zu ergreifen und mit dem Greifer 36' gleichzeitig ein bereits ergriffenes und transportiertes Werkstück abzusetzen und freizugeben. Somit ist bei der Drehbwegung immer an einem der beiden Greifer 36, 36' ein Werkstück, so dass eine kontinuierliche Zustellung von Werkstücken ermöglicht ist, was den Produktionsprozess beschleunigt verglichen mit einer Zustellvorrichtung mit nur einem Greifer.

Die axiale Bewegung ist aber nicht nur zwischen den beiden Anschlagspositionen, sondern auch in den jeweiligen Anschlagspositionen möglich. In der in den Fig. 4 und 5 dargestellten ersten Anschlagsposition könnte eine axiale Verstellung erfolgen, wenn nur die Hohlwelle des Aktuators 14 angetrieben wird, so dass der Aktuator beispielsweise nach oben bewegt wird. Bei dieser Bewegung gleitet der Stift 52 entlang der Randtlache 56 ebenfalls nach oben.

Die Kombination der mechanischen Anschlagmittel mit einem Transportwerkzeug 32 mit zwei Greifern 36, 36' ermöglicht sehr hohe Zustellgeschwindigkeiten, so dass pro Minute bis etwa 120 Werkstücke an der ersten Anschlagsposition ergriffen, um 180° transportiert und an der zweiten Anschlagsposition wieder abgesetzt werden können. Je nach Masse des zu bewegenden Werkstücks kann diese Zahl auch kleiner oder grösser sein.

Unterstützt wird diese hohe Zustellgeschwindigkeit auch durch eine entsprechende Regelung der Drehbwegung, derart, dass bei einer Drehung des Werkzeugs in eine der beiden Anschlagspositionen eine Ansteuerung auf einen in Drehrichtung etwas weiter weg liegenden, angesteuerten Drehwinkel erfolgt. Dies führt dazu, dass das Werkzeug durch den mechanischen Anschlag in einem Bereich der Drehung blockiert wird, kurz bevor der für die elektronische Ansteuerung vorgegebene Sollwert der Drehwinkel-Endstellung erreicht ist, so dass einerseits ein Andrücken des drehbaren Anschlagelements am ortfesten Anschlagelement und andererseits eine Zeitersparnis beim Erreichen der gewünschten Anschlagsposition ermöglicht ist.

Durch geeignete Ansteuerung der beiden Motoren durch die Steuereinrichtung, also durch eine geeignete zeitliche Abfolge von Drehzahländerungen oder/und Dreh-sinnänderungen können beliebige, sehr präzise Axial- oder/und Drehbewegungen mit dem Werkzeugtreiberaggregat gleichzeitig oder nacheinander durchgeführt werden. Insgesamt ermöglicht das erfindungsgemäße Werkzeugtreiberaggregat somit die Optimierung von Bewegungsabläufen für beliebige Einsatzgebiete, besonders aber für Transport- und Zustellbewegungen. Dabei wird für den Antrieb nur ein elektrischer Anschluss benötigt, was eine Vereinfachung beim Aufbau des Werkzeugtreiberaggregats mit sich bringt. Ferner wird durch die mechanischen Anschlagmittel eine Vereinfachung der Ansteuerung von bestimmten Drehpositionen erreicht, was zu einer Zeitersparnis beim Einstellen einer solchen Drehposition führt.

## Patentansprüche

1. Werkzeugtreiberaggregat, insbesondere für den Antrieb von Transportwerkzeugen, umfassend ein Linearstellglied (12) mit einem in einem Gehäuse (18) gelagerten, eine Drehachse (D) festlegenden Aktuator (14), der durch eine erste Drehantriebseinrichtung (16, 20) angetrieben und relativ zu dieser in Axialrichtung verstellbar ist, wobei das Aggregat ferner eine zweite Drehantriebseinrichtung (24, 26, 28) aufweist, die derart auf den Aktuator (14) wirkt, dass die axiale Verstellung oder/und eine Drehung des Aktuators (14) relativ zu den beiden Drehantriebseinrichtungen (16, 20; 26, 28) abhängig von einer jeweiligen Drehzahl der beiden Drehantriebseinrichtungen (16, 20; 26, 28) einstellbar ist, und wobei, die zweite Drehantriebseinrichtung (26, 28) eine Welle (22) antreibt, welche mit dem Aktuator (14) in gemeinsame Drehung um die Drehachse (D) versetzt werden kann und gemeinsam relativ zu den beiden Drehantriebseinrichtungen (16, 20; 26, 28) axial verstellbar ist, **dadurch gekennzeichnet, dass** das Aggregat zur Begrenzung der Drehung mechanische Anschlagmittel (52, 58) umfasst, die wenigstens ein bezüglich der beiden Drehantriebseinrichtungen ortsfestes Anschlagelement (58) und wenigstens ein mit der Welle (22) oder/und dem Aktuator (14) verbundenes, drehbares Anschlagelement (52) umfassen, und dass sich das ortsfeste Anschlagelement (58) in axialer Richtung über im wesentlichen die gesamte Länge der möglichen axialen Verstellung erstreckt, so dass das drehbare Anschlagelement (52) in Anschlagsposition entlang dem ortsfesten Anschlagelement (58) axial gleiten kann.

2. Werkzeugtreiberaggregat nach Anspruch 1, **dadurch gekennzeichnet, dass** die Welle (22) in einem weiteren Gehäuse (30) gelagert ist.

3. Werkzeugtreiberaggregat nach Anspruch 1, **dadurch gekennzeichnet, dass** das ortsfeste Anschlagelement als Halbschale (58) ausgebildet ist, welche die Welle (22) oder/und den Aktuator (14) teilweise umschließt.

4. Werkzeugtreiberaggregat nach einem der Ansprüche 1 oder 3, **dadurch gekennzeichnet, dass** das drehbare Anschlagelement als Stift (52) ausgebildet ist, der sich in radialer Richtung weg von der Welle (22) bzw. dem Aktuator (14) erstreckt.

5. Werkzeugtreiberaggregat nach einem der Ansprüche 1, 3 oder 4, **dadurch gekennzeichnet, dass** die erste oder/und die zweite Drehantriebseinrichtung (12, 24) derart angesteuert werden, dass das drehbare Anschlagelement (52) in Anschlagsposition gegen das ortsfeste Anschlagelement (58) vorgespannt ist.

6. Werkzeugtreiberaggregat nach einem der vorhergehenden Ansprüche, **dadurch gekennzeichnet, dass** der Aktuator (14) und die Welle (22) durch Kraftschluss, insbesondere Formschluss, Verschweißung oder Verklebung, oder vermittels einer Adpatereinrichtung oder vermittels einer Sicherheitskupplung, insbesondere Rutschkupplung, miteinander koppelbar oder gekoppelt sind.

7. Werkzeugtreiberaggregat nach einem der vorhergehenden Ansprüche, jedenfalls nach Anspruch 2, **dadurch gekennzeichnet, dass** die beiden Gehäuse (18, 30) mittels eines Gehäuseverbindungsabschnitts (38), insbesondere eines Flanschs, miteinander verbunden sind.

8. Werkzeugtreiberaggregat nach Anspruch 7, **dadurch gekennzeichnet, dass** die mechanischen Anschlagmittel (52, 58) im Bereich des Gehäuseverbindungsabschnitts (38) vorgesehen sind.

9. Werkzeugtreiberaggregat nach Anspruch 8, **dadurch gekennzeichnet, dass** der Gehäuseverbindungsabschnitt derart ausgebildet ist, dass er das ortsfeste Anschlagelement bildet.

## Claims

1. A tool driver assembly, in particular for driving transport tools, comprising a linear control element (12) with an actuator (14) which is mounted in a housing (18), which defines an axis of rotation (D) and which is driven by a first rotating drive device (16,20) and can be displaced relative thereto in an axial direction, wherein the assembly also has a second rotating drive device (24,26,28) which acts on the actuator (14) in such a way that the axial displacement and/or a rotation of the actuator (14) relative to the two rotating drive devices (16,20;26,28) is adjustable as a function of the respective speed of rotation of the two rotating drive devices (16,20;26,28), and wherein the second rotating drive device (26,28) drives a shaft (22) which can be moved in common rotation with the actuator (14) about the axis of rotation (D) and can be displaced together axially relative to the two rotating drive devices (16,20;26,28), **characterised in that**, in order to limit rotation, the assembly comprises mechanical stop means (52,58) which comprise at least one stop member (58) which is fixed relative to the two rotating drive devices and at least one rotatable stop member (52) connected to the shaft (22) and/or to the actuator (14), and **in that** the fixed stop member (58) extends in an axial direction over substantially the entire length of the possible axial displacement so that the rotatable stop member (52) can slide axially in the stop position along the fixed stop member (58).

2. A tool driver assembly according to Claim 1, **characterised in that** the shaft (22) is mounted in a further housing (30).

3. A tool driver assembly according to Claim 1, **characterised in that** the fixed stop member is in the form of a half shell (58) which partially surrounds the shaft (22) and/or the actuator (14).

4. A tool driver assembly according to one of Claims 1 or 3, **characterised in that** the rotatable stop member is in the form of a pin (52) which extends in a radial direction away from the shaft (22) or the actuator (14).

5. A tool driver assembly according to one of Claims 1,3 or 4 **characterised in that** the first and/or the second rotating drive device (12,14) are controlled in such a way that the rotatable stop member (52) is biased in the stop position against the fixed stop member (58).

6. A tool driver assembly according to any one of the preceding Claims, **characterised in that** the actuator (14) and the shaft (22) can be coupled or are coupled with one another by force locking, in particular form locking, welding or bonding, or by means of an adapter device or by means of a safety clutch, in particular a slipping clutch.

7. A tool driver assembly according to any one of the preceding Claims, at least according to Claim 2, **characterised in that** the two housings (18,30) are joined together by means of a housing-connecting portion (38), in particular a flange.

8. A tool driver assembly according to Claim 7, **characterised in that** the mechanical stop means (52,58) are provided in the vicinity of the housing-connecting portion (38).

9. A tool driver assembly according to Claim 8, **characterised in that** the housing-connecting portion is designed so that it forms the fixed stop member.

## Revendications

1. Ensemble d'actionnement pour un outil, en particulier pour l'entraînement d'outils de transport, comprenant un organe de réglage linéaire (12) avec un actionneur (14) définissant un axe de rotation (D), logé dans un boîtier (18), qui est entraîné par un premier dispositif d'entraînement en rotation (16, 20) et peut être réglé par rapport à celui-ci dans le sens axial, sachant que l'ensemble présente de plus un second dispositif d'entraînement en rotation (24, 26, 28) qui agit sur l'actionneur (14) de telle manière que le réglage axial et/ou une rotation de l'actionneur (14) par rapport aux deux dispositifs d'entraînement en rotation (16, 20 ; 26, 28) puisse être réglée selon une vitesse de rotation respective des deux dispositifs d'entraînement en rotation (16, 20 ; 26, 28) et sachant que le second dispositif d'entraînement en rotation (26, 28) entraîne un arbre (22) qui peut être amené en rotation commune avec l'actionneur (14) autour de l'axe de rotation (D) et peut être réglé axialement de manière commune par rapport aux deux dispositifs d'entraînement en rotation (16, 20 ; 26, 28), **caractérisé en ce que** l'ensemble comporte des moyens de butée mécaniques (52, 58) pour limiter la rotation, lesquels comportent au moins un élément de butée (58) fixe par rapport aux deux dispositifs d'entraînement en rotation et au moins un élément de butée (52) rotatif relié à l'arbre (22) et/ou à l'actionneur (14), et **en ce que** l'élément de butée (58) fixe s'étend dans le sens axial sur sensiblement toute la longueur du réglage axial possible de sorte que l'élément de butée (52) rotatif puisse glisser axialement en position de butée le long de l'élément de butée fixe (58).

2. Ensemble d'actionnement pour un outil selon la revendication 1, **caractérisé en ce que** l'arbre (22) est logé dans un autre boîtier (30).

3. Ensemble d'actionnement pour un outil selon la revendication 1, **caractérisé en ce que** l'élément de butée fixe est réalisé comme une demi-coque (58) qui entoure en partie l'arbre (22) et/ou l'actionneur (14).

4. Ensemble d'actionnement pour un outil selon l'une quelconque des revendications 1 ou 3, **caractérisé en ce que** l'élément de butée rotatif est réalisé comme une tige (52) qui s'étend en direction radiale loin de l'arbre (22) ou de l'actionneur (14).

5. Ensemble d'actionnement pour un outil selon l'une quelconque des revendications 1, 3 ou 4, **caractérisé en ce que** le premier et/ou le second dispositif d'entraînement en rotation (12, 24) sont commandés de telle manière que l'élément de butée rotatif (52) soit précontraint en position de butée contre l'élément de butée fixe (58).

6. Ensemble d'actionnement pour un outil selon l'une quelconque des revendications précédentes, **caractérisé en ce que** l'actionneur (14) et l'arbre (22) sont ou peuvent être couplés ensemble par liaison à force, en particulier liaison positive, soudage ou collage ou à l'aide d'un dispositif adaptateur ou à l'aide d'un accouplement de sécurité, en particulier un accouplement à glissement.

7. Ensemble d'actionnement pour un outil selon l'une quelconque des revendications précédentes, en tout cas selon la revendication 2, **caractérisé en ce que** les deux boîtiers (18, 30) sont reliés entre eux à l'aide d'une section de liaison de boîtier (38), en particulier d'une bride.

8. Ensemble d'actionnement pour un outil selon la revendication 7, **caractérisé en ce que** les moyens de butée mécaniques (52, 58) sont prévus dans la zone de la section de liaison de boîtier (38).

9. Ensemble d'actionnement pour un outil selon la revendication 8, **caractérisé en ce que** la section de liaison de boîtier est réalisée de manière à former l'élément de butée fixe.
